# EUROPÄISCHE PATENTSCHRIFT

(11) **EP 3 073 622 B1**
(45) Veröffentlichungstag und Bekanntmachung des Hinweises auf die Patenterteilung: **03.05.2017**
(21) Anmeldenummer: 15000875.3
(22) Anmeldetag: 25.03.2015
(51) Int. Cl.: H02K 29/08, H02K 1/27

(54) **ELEKTRONISCH KOMMUTIERTER ELEKTROMOTOR MIT DIREKTABTASTUNG DES ROTORMAGNETFELDS**
ELECTRONICALLY COMMUTATED ELECTRIC MOTOR WITH DIRECT SAMPLING OF THE MAGNETIC FIELD OF THE ROTOR
MOTEUR ÉLECTRIQUE COMMUTÉ ÉLECTRONIQUEMENT PAR BALAYAGE DIRECT DU CHAMP MAGNÉTIQUE DE ROTOR

(43) Veröffentlichungstag der Anmeldung: 28.09.2016
(73) Patentinhaber: Lakeview Innovation Ltd., 6374 Buochs (CH)
(72) Erfinder: Busse-Grawitz, Max Erick, CH-6055 Alpnach Dorf (CH); Imfeld, Stefan, CH-6074 Giswil (CH)
(74) Vertreter: Grünecker Patent- und Rechtsanwälte PartG mbB

(56) Entgegenhaltungen:
- EP-A2- 1 124 309
- JP-A- 2004 129 456
- US-A1- 2014 175 957

## Beschreibung

Die vorliegende Erfindung betrifft einen elektronisch kommutierten Elektromotor mit Direktabtastung des Rotormagnetfelds nach dem Oberbegriff des unabhängigen Anspruchs 1. Ein gattungsgemäßer Elektromotor umfasst einen Stator und einen Rotor, der mehrere Permanentmagneten aufweist, die in Umfangsrichtung verteilt angeordnet sind und das Rotormagnetfeld bestimmen. Der Elektromotor weist ferner einen Sensor auf, der die Position oder Geschwindigkeit des Rotors durch Direktabtastung des Rotormagnetfelds erfassbar macht, wobei der Sensor derart vom Stator beabstandet ist, dass das Statorfeld lediglich in geringem Ausmaß und günstigstenfalls nicht von dem Sensor erfasst wird. An einer Stirnseite des Rotors sind magnetische Flussleitelemente angeordnet, die sich mit dem Rotor mit bewegen und zumindest einen Teil des Rotormagnetfelds zu dem Sensor leiten.

Zur Kommutierung von bürstenlosen Elektromotoren mit Permanentmagnetrotor ist es erforderlich, die Rotorposition zu detektieren. Hierzu kann entweder ein zusätzlicher Steuermagnet abgetastet werden, der am Rotor befestigt wird. Alternativ ist es möglich, den oder die Permanentmagneten des Rotors direkt abzutasten. Die Direktabtastung bietet den Vorteil, dass in der Regel weniger Bauraum benötigt wird und vor allen Dingen die Kosten für den zusätzlichen Steuermagneten eingespart werden können. Bei der Direktabtastung besteht allerdings der Nachteil, dass häufig das Statorfeld eine nicht zu vernachlässigende Störung bei der Abtastung verursacht. Die Abtastung des Rotormagnetfelds führt gleichzeitig immer zu einer gewissen Abtastung des Statorsfeldes, was insbesondere bei hohen Statorströmen dazu führen kann, dass die Signale des verwendeten Sensors bzw. die daraus berechneten Kommutierungssignale unbrauchbar werden.

Aus dem Stand der Technik sind mehrere Lösungen bekannt, bei welchen die Position des Sensors vom Stator weg nach außen verlagert wird, um den Einfluss des Statorfeldes zu reduzieren.

Die DE 29802297 U1 beschäftigt sich mit einem bürstenlosen Gleichstrommotor mit Innenläufer, bei dem die Abtastung des Rotors nach außen verlagert wird. Die Positionierung der Sensoren in der Nähe des Rotors habe den Nachteil, dass eine zusätzliche Kontaktierung zu einer Steuerplatine notwendig ist, auf der die Kommutierungselektronik untergebracht ist. Zur Lösung dieses Problems ist gemäß DE 29802297 U1 vorgesehen, dass die Hallsensoren auf einer vom Rotor beabstandet angeordneten Steuerungsplatine angebracht sind und durch magnetisch leitende Einlegteile mit dem Magnetfeld des Rotors verbunden sind. Durch die Einlegeteile wird ein Teil des am Rotor austretenden Magnetfeldes zu den durch Hallsensoren gebildeten Kommutierunggebern geleitet. Da die Feldstärke am Ende der Einlegteile geringer ist als direkt am Rotor, werden entsprechend empfindliche Sensoren verwendet. Bei der aus DE 29802297 U1 bekannten Lösung sind die magnetisch leitenden Einlegteile gehäusefest angeordnet.

Die EP 1542344 A1 beschäftigt sich ebenfalls mit der Abtastung des Rotormagnetfelds. Das Magnetfeld des Rotormagneten wird durch einen zumindest teilweise weichmagnetischen Leiter zu einem Sensor geführt, der in axialer Richtung betrachtet außerhalb des Stators angeordnet ist. Der weichmagnetische Leiter ist entweder im Luftspalt zwischen Rotor und Stator oder in einer Zahnlücke des Stators am Außenumfang des Rotormagneten angeordnet. Auch bei dieser Lösung rotiert der weichmagnetische Leiter nicht mit dem Rotor mit.

Die WO 2005119888 A1 zeigt ebenfalls einen bürstenlosen Gleichstrommotor, bei dem die Abtastung der Rotormagneten mittels mehrerer magnetischer Flussleitelemente bewerkstelligt wird, die nicht mit dem Rotor mit drehen sondern am Stator befestigt sind.

Auch die DE 102007060241 A1 zeigt eine Lösung, bei der die Flussleitelemente gehäusefest angeordnet sind. Über das Flussleitelement wird ein Rückschluss zur Führung des Rotorflusses zwischen gegensinnigen Polen des Rotormagneten gebildet.

Bei den genannten Lösungen mit gehäusefesten Flussleitelementen wird stets nicht nur ein Teil des Rotormagnetfelds sondern auch ein Teil des Statorfeldes an die Sensoren weitergeleitet. Die Störanfälligkeit ist bei diesen Lösungen daher relativ groß.

Die DE 2008002180 A1 zeigt einen Motor mit einem diametral magnetisierten Rotormagneten. Das Streufeld des Rotormagneten wird durch ein hülsenförmiges weichmagnetisches Koppelelement, welches die Rotorwelle umschließt, nach außen zu einem Hallsensor geleitet.

Die JP 2004129456 zeigt einen gattungsgemäßen Elektromotor. Sie beschäftigt sich ebenfalls mit der Verbesserung der Erkennung der Rotorposition. Um den Einfluss des Statorfeldes zu reduzieren, sind die Sensoren radial beabstandet vom Stator angeordnet.

Der Rotor umfasst einen Kern aus einem laminierten Blechpaket. Die Rotormagnete sind in durchgehende Ausnehmungen des Kerns eingesetzt. Der Rotor ist an einem Ende durch eine nicht-magnetische Stahlplatte abgeschlossen. In die Stahlplatte sind magnetische Flussleitelemente eingesetzt, die das Magnetfeld der Rotormagneten an magnetische Elemente weiterleiten, welche wiederum von den Sensoren abgetastet werden. Die magnetischen Flussleitelemente sind in Umfangsrichtung betrachtet auf gleicher Position angeordnet wie die Rotormagneten. Sie sollen möglichst nah am Stator positioniert werden. Eine Beeinflussung durch das Magnetfeld des Stators ist daher auch bei dieser Lösung gegeben.

Die EP 1124309 A2 zeigt einen Motor mit einem Rotor, der einen Kern aus einem laminierten Blechpaket aufweist. In dem Kern sind mehrere Permanentmagneten mit jeweils abwechselnder Magnetisierungsrichtung aufgenommen. Der Rotoraufbau wird endseitig von einer nicht-magnetischen Platte abgeschlossen. Auf gleicher Position, in Umfangsrichtung betrachtet, wie die Permanentmagneten sind auf oder in der nicht-magnetischen Platte kleinere Plättchen magnetischen Materials angeordnet. Diese werden von einem Hallsensor abgetastet. Auch bei dem aus EP 1124309 A2 bekannten Elektromotor wird eine Störung der Abtastung durch das Statorfeld nicht vollständig ausgeschlossen.

Aufgabe der vorliegenden Erfindung ist es, den elektronisch kommutierten Elektromotor der gattungsgemäßen Art dahingehend zu verbessern, dass eine Störung der Direktabtastung des Rotormagnetfelds durch das Statorfeld weiter reduziert wird.

Die Aufgabe wird gelöst durch die Merkmale des unabhängigen Anspruchs 1. Demnach liegt bei einem elektronisch kommutierten Elektromotor der gattungsgemäßen Art dann eine erfindungsgemäße Lösung der Aufgabe vor, wenn die Flussleitelemente, in Umfangsrichtung des Rotors betrachtet, jeweils zwischen zwei Permanentmagneten des Rotors positioniert sind.

Dadurch wird eine signifikant verbesserte Weiterleitung des Rotormagnetfeldes an den verwendeten Sensor oder die verwendeten Sensoren erreicht. Die Permanentmagneten des Rotors sind vorzugsweise gleichmäßig voneinander beanstandet reihum angeordnet. Gleiches gilt vorzugsweise auch für die Positionierung der Flussleitelemente. Jedes der Flussleitelemente ist, in Umfangsrichtung des Rotors betrachtet, weiter vorzugsweise mittig zwischen jeweils zwei Permanentmagneten des Rotors positioniert. Die Anzahl der Pole des Rotors entspricht der Anzahl der Permanentmagneten. Benachbarte Permanentmagneten sind jeweils entgegengesetzt zueinander gepolt. Der Rotor ist vorzugsweise als Innenläufer ausgeführt.

Vorteilhafte Ausführungsformen der vorliegenden Erfindung sind Gegenstand der Unteransprüche.

In einer besonders bevorzugten Ausführungsform der vorliegenden Erfindung ist vorgesehen, dass die Magnetisierungsrichtung jedes der Permanentmagneten im Wesentlichen senkrecht zu einer radialen Richtung des Rotors ist. Dadurch wird eine optimale Weiterleitung des Rotormagnetfelds durch die Flussleitelemente gewährleistet. Die Permanentmagneten sind vorzugsweise speichenförmig um die Achse des Rotors angeordnet. Weiter vorzugsweise ist die in radialer Richtung des Rotors gemessene Höhe der Permanentmagneten größer als die senkrecht dazu gemessene Breite der Permanentmagneten. Die Höhe eines Permanentmagneten entspricht dabei sozusagen der Länge einer Speiche, die Breite des Permanentmagneten entspricht der Dicke der Speiche.

In einer weiteren besonders bevorzugten Ausführungsform der vorliegenden Erfindung ist jeweils zwischen zwei benachbarten Permanentmagneten ein weichmagnetischer Eisenkern des Rotors angeordnet, wobei jedes Flussleitelement in Umfangsrichtung des Rotors betrachtet mittig auf einem der weichmagnetischen Eisenkerne positioniert ist. Dadurch wird eine optimale Führung des Magnetfelds zu den Sensoren gewährleistet. Vorzugsweise weisen die Permanentmagneten eine einheitliche Breite auf, wobei die weichmagnetischen Eisenkerne in einer senkrecht zur Achse des Rotors stehenden Ebene einen sektorförmigen bzw. keilförmigen Querschnitt aufweisen. Permanentmagneten mit einheitlicher Breite können relativ günstig und einfach hergestellt werden. Durch die keilförmigen Eisenkerne wird das Magnetfeld der Permanentmagneten optimal beeinflusst. Weiter vorzugsweise sind genauso viele Flussleitelemente vorgesehen wie weichmagnetische Eisenkerne.

In einer weiteren besonders bevorzugten Ausführungsform der vorliegenden Erfindung entspricht die in Umfangsrichtung des Rotors gemessene maximale Breite der Flussleitelemente der ebenfalls in Umfangsrichtung des Rotors gemessenen Breite des zugehörigen weichmagnetischen Eisenkerns an der entsprechenden Stelle. Dadurch wird eine hohe Konzentration des Magnetfelds in den Flussleitelementen erreicht. Dies gewährleistet gleichzeitig eine gute Sensorsignalstärke.

In einer weiteren bevorzugten Ausführungsform der vorliegenden Erfindung sind die Flussleitelemente stiftförmig ausgeführt, wobei die Achsen der Flussleitelemente parallel zur Achse des Rotors ausgerichtet sind. Auch diese Ausführungsform gewährleistet eine optimale Weiterleitung des Magnetfelds an die Sensoren. Vorzugsweise weisen die Flussleitelemente dabei einen kreisrunden Querschnitt auf. Sie sind somit vorzugsweise zylindrisch ausgeführt. Bei dieser Ausführungsform sind die Flussleitelemente wirtschaftlich herstellbar. Alternativ können die Flussleitelemente auch einen rechteckigen Querschnitt oder einen länglich ovalen Querschnitt aufweisen. In letzterem Fall wird eine besonders gute Magnetfeldführung erreicht, wenn die größere Hauptachse des ovalen Querschnitts in Bezug auf die Achse des Rotors radial ausgerichtet ist. Weiter vorzugsweise entspricht die Länge der Stifte ihrem Durchmesser.

In einer weiteren bevorzugten Ausführungsform der vorliegenden Erfindung sind die Flussleitelemente weichmagnetisch ausgeführt. Es ist jedoch auch denkbar, hartmagnetische Flussleitelemente zu verwenden. Besonders bevorzugt sind die Flussleitelemente aus weichmagnetischem Stahl hergestellt.

In einer weiteren Ausführungsform der vorliegenden Erfindung sind die Flussleitelemente in Ausnehmungen einer Kunststoffhülle eingebettet, die vorzugsweise den gesamten Rotor umschließt. Bei dieser Ausführungsform wird eine relativ einfache und kostengünstige sowie exakte Positionierung der Flussleitelemente erreicht. Besonders kostengünstig kann die Kunststoffhülle im Spritzgussverfahren hergestellt werden.

In einer alternativen Ausführungsform sind die Flussleitelemente in Ausnehmungen einer unmagnetischen Scheibe aufgenommen, die an der Stirnseite des Rotors angeordnet ist. Besonders vorteilhaft ist es, wenn die Scheibe eine Axialsicherung für die Permanentmagneten und für die Eisenkerne bildet, indem sie den Rotor in axialer Richtung abschließt. Die Scheibe übernimmt in diesem Fall eine Doppelfunktion. Weiter besonders von Vorteil ist dabei, wenn die Scheibe gleichzeitig eine Auswuchtscheibe des Rotors darstellt. Dadurch wird der Aufbau der Rotorbaugruppe besonders kompakt gehalten. Das Auswuchten des Rotors geschieht, indem am Außenumfang der Scheibe gezielt Material abgetragen wird. Die in den Ausnehmungen der Scheibe aufgenommenen Flussleitelemente müssen hierfür so weit vom Außenumfang der Scheibe beanstandet sein, dass sie vom Auswuchtvorgang nicht betroffen werden. Die unmagnetische Scheibe ist vorzugsweise aus einem unmagnetischen Metall, besonders bevorzugt aus einem unmagnetischen Stahl, gefertigt.

In einer weiteren bevorzugten Ausführungsform der vorliegenden Erfindung sind die Flussleitelemente magnetisch in den Ausnehmungen der Kunststoffhülle bzw. in den Ausnehmungen der unmagnetischen Scheibe gehalten. Bei dieser Ausführungsform ergibt sich eine relativ einfache und kostengünstige Montage. Um den Halt der Flussleitelemente zu verbessern, kann vorgesehen sein, dass die Flussleitelemente mit der Kunststoffhülle oder mit der unmagnetischen Scheibe verklebt werden.

In einer weiteren besonders bevorzugten Ausführungsform der vorliegenden Erfindung beträgt der Abstand zwischen einem Flussleitelement und den jeweils angrenzenden Permanentmagneten, zwischen welchen das Flussleitelement angeordnet ist, 2 mm oder weniger, vorzugsweise sogar 1 mm oder weniger. Auf diese Weise wird eine optimale Führung des Magnetfelds erreicht. Weiter vorzugsweise beträgt der Abstand zwischen dem Flussleitelement und dem Sensor 2 mm oder weniger, vorzugsweise 1 mm oder weniger. Dadurch wird eine optimale Abtastung durch den Sensor gewährleistet.

In einer weiteren bevorzugten Ausführungsform der vorliegenden Erfindung handelt es sich bei dem Sensor um einen Hallsensor.

Die Flussleitelemente sind in einer weiteren bevorzugten Ausführungsform der vorliegenden Erfindung in Bezug auf die Achse des Rotors entweder möglichst weit außen oder möglichst weit innen angeordnet.

Vorteilhafte Ausführungsbeispiele der vorliegenden Erfindung werden im Folgenden anhand von Zeichnungen näher erläutert.

Es zeigen:
- Figur 1:: einen Längsschnitt eines erfindungsgemäßen elektronisch kommutierten Elektromotors,
- Figur 2:: den Rotor des erfindungsgemäßen Elektromotors aus Figur 1 in einer Schrägansicht,
- Figur 3:: eine Axialansicht des Rotors aus Figur 2,
- Figur 4:: die Ansicht aus Figur 3 mit einer alternativen Ausführung der Flussleitelemente des Rotors,
- Figur 5:: die Ansicht aus Figur 4 mit einer weiteren alternativen Ausführung der Flussleitelemente, und
- Figur 6:: einen Längsschnitt eines erfindungsgemäßen elektronisch kommutierten Elektromotors gemäß einer weiteren Ausführungsform der vorliegenden Erfindung.

Für die folgenden Ausführungen gilt, dass gleiche Teile durch gleiche Bezugszeichen bezeichnet werden. Sofern in einer Zeichnung Bezugszeichen enthalten sind, auf die in der zugehörigen Figurenbeschreibung nicht näher eingegangen wird, so wird auf vorangehende oder nachfolgende Figurenbeschreibungen Bezug genommen.

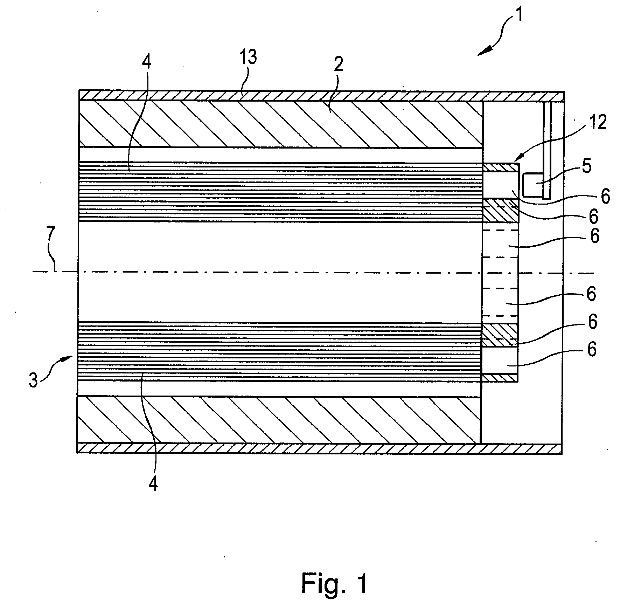

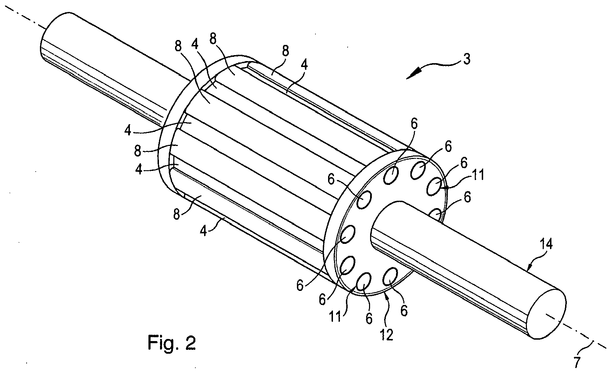

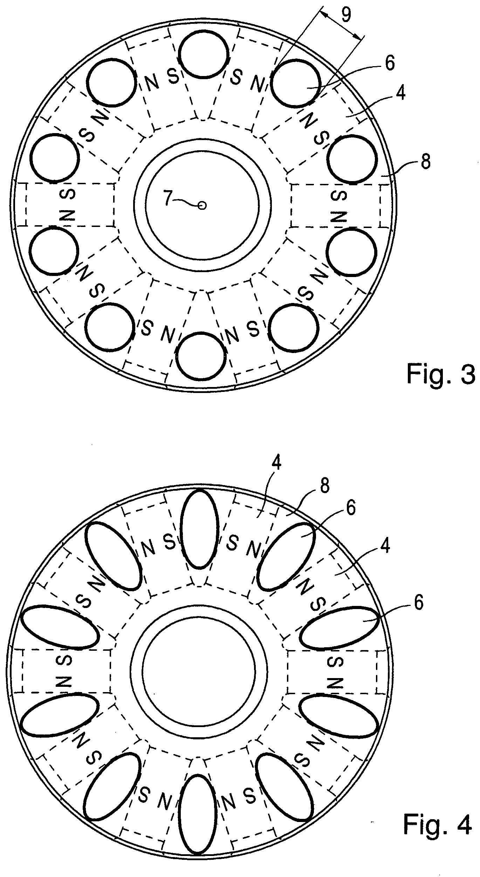

Figur 1 zeigt einen Längsschnitt eines erfindungsgemäßen elektronisch kommutierten Elektromotors 1 gemäß einem ersten Ausführungsbeispiel. Der Elektromotor 1 weist einen außenliegenden hohlzylindrischen Stator 2 sowie einen als Innenläufer ausgeführten Rotor 3 auf. Der Rotor ist näher in Figur 2 dargestellt. In dieser Darstellung ist auch die Welle 14 des Rotors dargestellt, auf deren Darstellung in Figur 1 aus Anschaulichkeitsgründen verzichtet wurde. Eine axiale Draufsicht auf den Rotor zeigt Figur 3.

Der Rotor weist mehrere Permanentmagneten 4 auf, die in Bezug auf die Achse 7 des Rotors speichenförmig und gleichmäßig beanstandet voneinander angeordnet sind. Wie aus Figur 3 hervorgeht, ist die Magnetisierungsrichtung jedes der Permanentmagneten im Wesentlichen senkrecht zu einer radialen Richtung des Rotors. Benachbarte Permanentmagneten sind dabei entgegengesetzt magnetisch gepolt. Zwischen benachbarten Permanentmagneten befindet sich jeweils ein weichmagnetischer Eisenkern 8. In Figur 3 ist zu erkennen, dass die in radialer Richtung des Rotors gemessene Höhe der Permanentmagneten größer ist als die senkrecht dazu gemessene Breite der Permanentmagneten. Die Höhe eines Permanentmagneten entspricht sozusagen der Länge einer Speiche, die Breite des Permanentmagneten entspricht der Dicke einer Speiche. Da die Permanentmagneten eine einheitliche Breite aufweisen, ist der Querschnitt der weichmagnetischen Eisenkerne sektorförmig bzw. keilförmig.

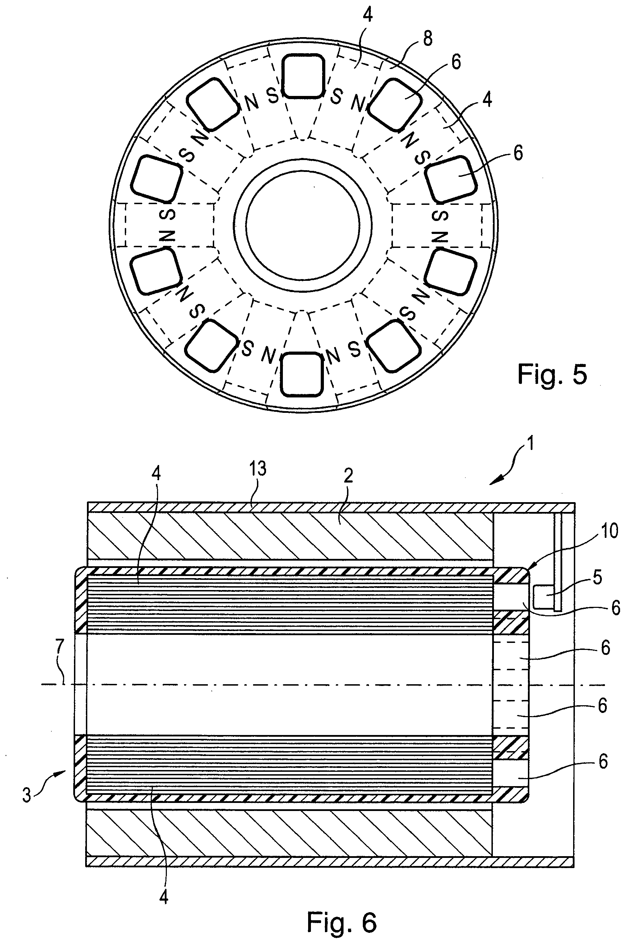

An dem in Figur 1 rechten stirnseitigen Ende des Rotors sind mehrere magnetische Flussleitelemente 6 angeordnet, die dazu dienen, dass Rotormagnetfeld an einen Hallsensor 5 weiterzuleiten, der in axialer Richtung außerhalb des Stators angeordnet und fest mit dem Gehäuse 13 des Elektromotors verbunden ist. Über den Hallsensor wird die Position des Rotors erfasst. Die Sensorsignale werden zur Kommutierung des Statorfelds verwendet. Die Flussleitelemente sind auf einem Kreis angeordnet, dessen Mittelpunkt auf der Achse 7 des Rotors liegt. Figur 3 zeigt, dass jedes der Flussleitelemente, in Umfangsrichtung des Rotors betrachtet, jeweils zwischen zwei benachbarten Permanentmagneten 4 angeordnet ist. Die Flussleitelemente 6 sind sozusagen mittig auf den dazwischenliegenden Eisenkernen 8 positioniert. Die Breite 9 der Flussleitelemente entspricht der Breite der Eisenkerne im entsprechenden Abstand von der Achse 7 des Rotors. Bei dem gezeigten Ausführungsbeispiel sind die magnetischen Flussleitelemente 6 zylindrisch ausgeführt. Sie weisen daher einen kreisrunden Querschnitt auf. Es sind jedoch auch andere Querschnitte möglich. Besonders vorteilig ist ein länglich ovaler Querschnitt, wie es in Figur 4 dargestellt ist. Bei dieser Ausführungsform wird das Magnetfeld der Permanentmagneten 4 optimal an den Sensor weitergeleitet. Figur 5 zeigt eine weitere Ausführungsform, bei der die Flussleitelemente 6 einen rechteckigen Querschnitt aufweisen. Ferner ist in Figur 1 zu erkennen, dass die Achsen der Flussleitelemente parallel zur Achse 7 des Rotors ausgerichtet sind und dass die Länge der Flussleitelemente ungefähr ihrem Durchmesser entspricht.

Bei dem Ausführungsbeispiel, das in den Figuren 1 bis 3 gezeigt ist, sind die Flussleitelemente in Ausnehmungen 11 einer unmagnetischen Stahlscheibe 12 aufgenommen. Die Stahlscheibe 12 schließt den Rotor einseitig ab und dient gleichzeitig zur axialen Sicherung der Permanentmagneten 4 und der weichmagnetischen Eisenkerne 8. Ferner kann die Stahlscheibe 12 auch als Auswuchtscheibe des Rotors dienen. Um den Rotor auszuwuchten, wird an geeigneter Stelle am Außenumfang der Scheibe, beispielsweise mittels eines Lasers, entsprechend Material abgetragen. Hierfür ist es erforderlich, dass die Flussleitelemente 6 einen ausreichenden Abstand zum Außenumfang der Scheibe aufweisen.

Durch die magnetischen Kräfte, die von den Permanentmagneten 4 hervorgerufen werden und auf die Flussleitelemente 6 wirken, werden die Flussleitelemente bereits an Ort und Stelle in den Ausnehmungen 11 der Scheibe 12 gehalten. Um den Halt zu verbessern, kann vorgesehen sein, dass die Flussleitelemente mit der Scheibe verklebt sind.

Um eine optimale Abtastung des Rotormagnetfelds durch den Sensor 5 zu gewährleisten, müssen der Abstand zwischen einem Flussleitelement und den jeweils angrenzenden Rotormagneten sowie der Abstand zwischen dem Flussleitelement und dem Sensor möglichst gering gehalten werden. Der lichte axiale Abstand zwischen den Flussleitelementen und dem Hallsensor 5 beträgt beim Ausführungsbeispiel weniger als 1 mm. Da die Breite 9 der Flussleitelemente der Breite der weichmagnetischen Eisenkerne 8 an der entsprechenden Stelle entspricht, besteht zwischen den Flussleitelementen und den jeweils angrenzenden Permanentmagneten 4 kein Abstand.

In Figur 6 ist ein weiteres Ausführungsbeispiel dargestellt, bei dem die Flussleitelemente 6 nicht in einer unmagnetischen Stahlscheibe sondern in einer Kunststoffhülle 10 aufgenommen sind, die als Kunststoffumspritzung ausgeführt ist und den Rotor umschließt.

Anstatt eines einzelnen Sensors 5 können selbstverständlich mehrere Sensoren vorgesehen sein. Die Sensoren können beispielsweise an unterschiedlichen Positionen in Umfangsrichtung positioniert werden. Anstatt von Hallsensoren können auch andere Sensoren verwendet werden, die dazu geeignet sind, das Magnetfeld des Rotors zu detektieren.

## Patentansprüche

1. Elektronisch kommutierter Elektromotor (1) mit einem Stator (2) und einem Rotor (3), der mehrere Permanentmagneten (4) aufweist, die in Umfangsrichtung verteilt angeordnet sind und das Rotormagnetfeld bestimmen, wobei der Elektromotor (1) zumindest einen Sensor (5) aufweist, der die Position oder Geschwindigkeit des Rotors (3) durch Direktabtastung des Rotormagnetfelds erfassbar macht, wobei der Sensor (5) derart vom Stator (2) beabstandet ist, dass das Statorfeld lediglich in geringem Ausmaß und günstigstenfalls nicht von dem Sensor (5) erfasst wird, und wobei an einer Stirnseite des Rotors (3) magnetische Flussleitelemente (6) angeordnet sind, die sich mit dem Rotor (3) mitbewegen und zumindest einen Teil des Rotormagnetfelds zu dem Sensor (5) leiten, **dadurch gekennzeichnet, dass** die Flussleitelemente (6) in Umfangsrichtung des Rotors (3) betrachtet jeweils zwischen zwei Permanentmagneten (4) des Rotors (3) positioniert sind.

2. Elektronisch kommutierter Elektromotor (1) nach Anspruch 1, **dadurch gekennzeichnet, dass** die Magnetisierungsrichtung jedes der Permanentmagneten (4) im Wesentlichen senkrecht zu einer radialen Richtung des Rotors (3) ist.

3. Elektronisch kommutierter Elektromotor (1) nach Anspruch 1 oder 2, **dadurch gekennzeichnet, dass** jeweils zwischen zwei benachbarten Permanentmagneten (4) ein weichmagnetischer Eisenkern (8) des Rotors angeordnet ist, wobei jedes Flussleitelement (6) in Umfangsrichtung des Rotors (1) betrachtet mittig auf einem der weichmagnetischen Eisenkerne (8) positioniert ist.

4. Elektronisch kommutierter Elektromotor (1) nach Anspruch 3, **dadurch gekennzeichnet, dass** die in Umfangsrichtung des Rotors (3) gemessene maximale Breite (9) der Flussleitelemente (6) der ebenfalls in Umfangsrichtung des Rotors (3) gemessenen Breite des zugehörigen weichmagnetischen Eisenkerns (8) an der entsprechenden Stelle entspricht.

5. Elektronisch kommutierter Elektromotor (1) nach einem der Ansprüche 1 bis 4, **dadurch gekennzeichnet, dass** die Flussleitelemente (6) stiftförmig ausgeführt sind, wobei die Achsen der Flussleitelemente (6) parallel zur Achse (7) des Rotors (3) ausgerichtet sind.

6. Elektronisch kommutierter Elektromotor (1) nach Anspruch 5, **dadurch gekennzeichnet, dass** die Flussleitelemente (6) einen kreisrunden Querschnitt aufweisen.

7. Elektronisch kommutierter Elektromotor (1) nach Anspruch 5 oder 6, **dadurch gekennzeichnet, dass** die Länge der Flussleitelemente (6) ihrem Durchmesser entspricht.

8. Elektronisch kommutierter Elektromotor (1) nach einem der Ansprüche 1 bis 7, **dadurch gekennzeichnet, dass** die Flussleitelemente (6) weichmagnetisch sind.

9. Elektronisch kommutierter Elektromotor (1) nach Anspruch 8, **dadurch gekennzeichnet, dass** die Flussleitelemente (6) aus weichmagnetischem Stahl bestehen.

10. Elektronisch kommutierter Elektromotor (1) nach einem der Ansprüche 1 bis 9, **dadurch gekennzeichnet, dass** die Flussleitelemente (6) in Ausnehmungen (11) einer Kunststoffhülle (10) eingebettet sind, die den Rotor (3) umschließt.

11. Elektronisch kommutierter Elektromotor (1) nach einem der Ansprüche 1 bis 9, **dadurch gekennzeichnet, dass** die Flussleitelemente (6) in Ausnehmungen (11) einer unmagnetischen Scheibe (12) aufgenommen sind, die an der Stirnseite des Rotors (3) angeordnet ist.

12. Elektronisch kommutierter Elektromotor (1) nach Anspruch 11, **dadurch gekennzeichnet, dass** die Scheibe (12) eine Axialsicherung für die Permanentmagneten (4) und die Eisenkerne bildet (8), indem sie den Rotor (3) in axialer Richtung abschließt.

13. Elektronisch kommutierter Elektromotor (1) nach Anspruch 11 oder 12, **dadurch gekennzeichnet, dass** die Scheibe (12) gleichzeitig eine Auswuchtscheibe des Rotors (3) ist.

14. Elektronisch kommutierter Elektromotor (1) nach einem der Ansprüche 11 bis 13, **dadurch gekennzeichnet, dass** die Scheibe (12) aus unmagnetischem Metall, vorzugsweise aus unmagnetischem Stahl, besteht.

15. Elektronisch kommutierter Elektromotor (1) nach einem der Ansprüche 10 bis 14, **dadurch gekennzeichnet, dass** die Flussleitelemente (6) magnetisch in den Ausnehmungen (11) der Kunststoffhülle (10) bzw. unmagnetischen Scheibe (12) gehalten und vorzugsweise mit der Kunststoffhülle (10) bzw. der unmagnetischen Scheibe (12) verklebt sind.

16. Elektronisch kommutierter Elektromotor (1) nach einem der Ansprüche 1 bis 15, **dadurch gekennzeichnet, dass** der Abstand zwischen einem Flussleitelement (6) und den jeweils angrenzenden Rotormagneten (4), zwischen welchen das Flussleitelement (6) angeordnet ist, und der Abstand zwischen dem Flussleitelement (6) und dem Sensor (5) 2 mm oder weniger, vorzugsweise 1 mm oder weniger beträgt.

17. Elektronisch kommutierter Elektromotor (1) nach einem der vorstehenden Ansprüche, **dadurch gekennzeichnet, dass** es sich bei dem Sensor (5) um einen Hallsensor handelt.

## Claims

1. Electronically commuted electric motor (1) with a stator (2) and a rotor (3) that has several permanent magnets (4) that are disposed in a distributed way in the circumferential direction and that determine the rotor field, whereby the electric motor (1) has at least one sensor (5) that makes the position of the speed of the rotor (3) detectable through direct sampling of the magnetic field of the rotor, whereby the sensor (5) is spaced from the stator (2) in a way that the stator field is only detected to a minor extent and preferably not at all by the sensor (5), and whereby magnetic flux-guiding elements (6) that move along with the rotor (3) and that guide at least a part of the magnetic field of the rotor to the sensor (5) are disposed on one front side of the rotor (3), **characterized in that** the flux-guiding elements (6), viewed in a circumferential direction of the rotor (3) are each positioned between two permanent magnets (4) of the rotor (3).

2. Electronically commuted electric motor (1) according to Claim 1, **characterized in that** the magnetization direction of each of the permanent magnets (4) is essentially perpendicular to a radial direction of the rotor (3).

3. Electronically commuted electric motor (1) according to Claim 1 or 2, **characterized in that** a magnetically soft iron core (8) of the rotor is disposed respectively between two adjacent permanent magnets (4), whereby each flux-guiding element (6) viewed in the circumferential direction of the rotor (1) is positioned centrally on one of the magnetically soft iron cores (8).

4. Electronically commuted electric motor (1) according to Claim 3, **characterized in that** the measured maximum width (9) of the flux-guiding elements (6) measured in the circumferential direction of the rotor (3) corresponds to the measured width of the pertaining magnetically soft iron core (8) at the corresponding position which is also measured in the circumferential direction of the rotor (3).

5. Electronically commuted electric motor (1) according to one of the Claims 1 to 4, **characterized in that** the flux-guiding elements (6) are formed in a pin-shaped way, whereby the axes of the flux-guiding elements (6) are aligned in parallel to the axis (7) of the rotor (3).

6. Electronically commuted electric motor (1) according to Claim 5, **characterized in that** the flux-guiding elements (6) have a circular cross-section.

7. Electronically commuted electric motor (1) according to Claim 5 or 6, **characterized in that** the length of the flux-guiding elements (6) corresponds to their diameter.

8. Electronically commuted electric motor (1) according to one of the Claims 1 to 7, **characterized in that** the flux-guiding elements (6) are magnetically soft.

9. Electronically commuted electric motor (1) according to Claim 8, **characterized in that** the flux-guiding elements (6) are made of magnetically soft steel.

10. Electronically commuted electric motor (1) according to one of the Claims 1 to 9, **characterized in that** the flux-guiding elements (6) are embedded in recesses (11) of a plastic sleeve (10) that encloses the rotor (3).

11. Electronically commuted electric motor (1) according to one of the Claims 1 to 9, **characterized in that** the flux-guiding elements (6) are integrated in recesses (11) of a non-magnetic disk (12) that is disposed on the front side of the rotor (3).

12. Electronically commuted electric motor (1) according to Claim 11, **characterized in that** the disk (12) forms an axial lock for the permanent magnets (4) and the iron cores (8) by means of finishing the rotor (3) in an axial direction.

13. Electronically commuted electric motor (1) according to Claim 11 or 12, **characterized in that** the disk (12) is at the same time a balancing disk of the rotor (3).

14. Electronically commuted electric motor (1) according to one of the Claims 11 to 13, **characterized in that** the disk (12) is made of non-magnetic metal, preferably of non-magnetic steel.

15. Electronically commuted electric motor (1) according to one of the Claims 10 to 14, **characterized in that** the flux-guiding elements (6) are held magnetically in the recesses (11) of the plastic sleeve (10) and/or non-magnetic disk (12) and are preferably glued to the plastic sleeve (10) and/or the non-magnetic disk (12).

16. Electronically commuted electric motor (1) according to one of the Claims 1 to 15, **characterized in that** the distance between a flux-guiding element (6) and the respectively adjacent rotor magnets (4) between which the flux-guiding element (6) is disposed and the distance between the flux-guiding element (6) and the sensor (5) amounts to 2 mm or less, preferably 1 mm or less.

17. Electronically commuted electric motor (1) according to one of the preceding claims, **characterized in that** the sensor (5) is a Hall sensor.

## Revendications

1. Moteur électrique (1) commuté électroniquement, comprenant un stator (2) et un rotor (3), qui présente plusieurs aimants permanents (4) agencés de manière répartie dans la direction périphérique et déterminant le champ magnétique de rotor, moteur électrique (1) dans lequel il est prévu au moins un détecteur (5), qui rend possible le relevé de la position ou de la vitesse du rotor (3) par balayage direct du champ magnétique de rotor,
dans lequel le détecteur (5) est situé à distance du stator (2) de manière telle que le champ de stator ne soit relevé que dans une faible mesure et avantageusement ne soit pas relevé par le détecteur (5), et
dans lequel sur un côté frontal du rotor (3) sont agencés des éléments de guidage de flux magnétiques (6), qui se déplacent avec le rotor (3) et dirigent au moins une partie du champ magnétique de rotor vers le détecteur (5),
**caractérisé en ce que** les éléments de guidage de flux (6) sont positionnés, en se référant à la direction périphérique du rotor (3), respectivement entre deux aimants permanents (4) du rotor (3).

2. Moteur électrique (1) commuté électroniquement selon la revendication 1, **caractérisé en ce que** la direction de magnétisation de chacun des aimants permanents (4) est sensiblement perpendiculaire à une direction radiale du rotor (3).

3. Moteur électrique (1) commuté électroniquement selon la revendication 1 ou la revendication 2, **caractérisé en ce que** respectivement entre à chaque fois deux aimants permanents (4) voisins, est agencé un noyau de fer doux magnétique (8) du rotor, chaque élément de guidage de flux (6) étant positionné, en se référant à la direction périphérique du rotor (1), au milieu d'un des noyaux de fer doux magnétique (8).

4. Moteur électrique (1) commuté électroniquement selon la revendication 3, **caractérisé en ce que** la largeur maximale (9) des éléments de guidage de flux (6), mesurée dans la direction périphérique du rotor (3), correspond à la largeur, également mesurée dans la direction périphérique du rotor (3), du noyau de fer doux magnétique (8) associé, au niveau de l'endroit correspondant.

5. Moteur électrique (1) commuté électroniquement selon l'une des revendications 1 à 4, **caractérisé en ce que** les éléments de guidage de flux (6) sont d'une configuration en forme de broche, les axes des éléments de guidage de flux (6) étant d'une orientation parallèle à l'axe (7) du rotor (3).

6. Moteur électrique (1) commuté électroniquement selon la revendication 5, **caractérisé en ce que** les éléments de guidage de flux (6) présentent une section transversale de forme ronde circulaire.

7. Moteur électrique (1) commuté électroniquement selon la revendication 5 ou la revendication 6, **caractérisé en ce que** la longueur des éléments de guidage de flux (6) correspond à leur diamètre.

8. Moteur électrique (1) commuté électroniquement selon l'une des revendications 1 à 7, **caractérisé en ce que** les éléments de guidage de flux (6) sont magnétiques doux.

9. Moteur électrique (1) commuté électroniquement selon la revendication 8, **caractérisé en ce que** les éléments de guidage de flux (6) sont réalisés en un acier magnétique doux.

10. Moteur électrique (1) commuté électroniquement selon l'une des revendications 1 à 9, **caractérisé en ce que** les éléments de guidage de flux (6) sont encastrés dans des évidements (11) d'une enveloppe de matière plastique (10), qui entoure le rotor (3).

11. Moteur électrique (1) commuté électroniquement selon l'une des revendications 1 à 9, **caractérisé en ce que** les éléments de guidage de flux (6) sont logés dans des évidements (11) d'un disque non magnétique (12), qui est agencé sur le côté frontal du rotor (3).

12. Moteur électrique (1) commuté électroniquement selon la revendication 11, **caractérisé en ce que** le disque (12) forme un arrêt axial pour les aimants permanents (4) et les noyaux de fer (8) en fermant le rotor (3) dans la direction axiale.

13. Moteur électrique (1) commuté électroniquement selon la revendication 11 ou la revendication 12, **caractérisé en ce que** le disque (12) est en même temps un disque d'équilibrage du rotor (3).

14. Moteur électrique (1) commuté électroniquement selon l'une des revendications 11 à 13, **caractérisé en ce que** le disque (12) est réalisé en un métal non magnétique, de préférence en acier non magnétique.

15. Moteur électrique (1) commuté électroniquement selon l'une des revendications 10 à 14, **caractérisé en ce que** les éléments de guidage de flux (6) sont maintenus magnétiquement dans les évidements (11) de l'enveloppe de matière plastique (10) ou le disque non magnétique (12), et sont, de préférence, collés à l'enveloppe de matière plastique (10) ou au disque non magnétique (12).

16. Moteur électrique (1) commuté électroniquement selon l'une des revendications 1 à 15, **caractérisé en ce que** la distance entre un élément de guidage de flux (6) et les aimants de rotor (4) respectivement voisins, entre lesquels est agencé l'élément de guidage de flux (6), et la distance entre l'élément de guidage de flux (6) et le détecteur (5) vaut 2 mm ou moins, de préférence 1 mm ou moins.

17. Moteur électrique (1) commuté électroniquement selon l'une des revendications précédentes, **caractérisé en ce que** concernant le détecteur (5), il s'agit d'un détecteur à effet Hall.
